# EUROPÄISCHE PATENTSCHRIFT

(11) **EP 1 682 807 B1**
(45) Veröffentlichungstag und Bekanntmachung des Hinweises auf die Patenterteilung: **13.03.2013**
(21) Anmeldenummer: 03772327.7
(22) Anmeldetag: 11.11.2003
(51) Int. Cl.: F16L 37/088

(54) **SCHNELLKUPPLUNG**
QUICK-FIT COUPLING
RACCORD RAPIDE

(43) Veröffentlichungstag der Anmeldung: 26.07.2006
(73) Patentinhaber: Hans Oetiker AG Maschinen- und Apparatefabrik, 8812 Horgen (CH)
(72) Erfinder: MEIER, Ulrich, CH-8820 Wädenswil (CH); GREMINGER, Hans, CH-8810 Horgen (CH)
(74) Vertreter: Strehl, Peter
(86) Internationale Anmeldenummer: PCT/EP2003/012599
(87) Internationale Veröffentlichungsnummer: WO 2005/052431

(56) Entgegenhaltungen:
- DE-A- 19 543 567
- DE-A- 19 623 995
- DE-B- 1 247 087
- US-A- 5 570 910

## Beschreibung

### Stand der Technik

Eine Schnellkupplung mit den im Oberbegriff des Anspruchs 1 angegebenen Merkmalen ist aus DE-A-196 23 995 bekannt. Dort ist an dem Rohrnippel ein Eingriffsabschnitt in Gestalt einer ringförmigen Rille vorgesehen, der mit einem in der Buchse vorhandenen federnden Verriegelungselement derart zusammenwirkt, daß durch Eingriff zwischen Verriegelungselement und Eingriffsabschnitt der Rohrnippel in der Buchse gehalten wird.

Beim Einschieben des Rohrnippels in die Buchse findet zwischen Verriegelungselement und Eingriffsabschnitt ein Verrasten statt, das an sich hör- und fühlbar ist. Erfolgt die Montage jedoch automatisch oder unter ungünstigen Arbeitsbedingungen, so scheidet ein hör- oder fühlbares Einrasten als Indikator für eine vollständige Verriegelung aus. Auch bei einer späteren Kontrolle läßt sich der Verriegelungszustand nur durch probeweises Herausziehen des Rohrnippels aus der Buchse überprüfen, was arbeitsaufwendig und bei fertig montierten Maschinen nicht ohne weiteres möglich ist.

### Zusammenfassung der Erfindung

Der Erfindung liegt die generelle Aufgabe zugrunde, Nachteile, wie sie bei vergleichbaren Schnellkupplungen nach dem Stand der Technik auftreten, mindestens teilweise zu beseitigen. Eine speziellere Aufgabe der Erfindung kann darin gesehen werden, eine Schnellkupplung anzugeben, bei der sich der Verriegelungszustand zwischen Rohrnippel und Buchse leicht feststellen läßt.

Die Lösung dieser Aufgabe gelingt mit der im Anspruch 1 gekennzeichneten Schnellkupplung. Bei der danach gestalteten Anordnung befindet sich der Eingriffsabschnitt (Rille oder Vorsprung) dann, wenn Rohrnippel und Buchse nicht ordnungsgemäß gekuppelte und damit nicht verriegelt sind, außerhalb der Buchse und ist somit sichtbar. Der Eingriffsabschnitt übernimmt damit außer seiner eigentlichen Einrastfunktion mit dem Verriegelungselement die zusätzliche Aufgabe eines Indikators über den Verriegelungszustand der Schnellkupplung.

Gemäß der Erfindung ist eine Druckfeder vorgesehen. Die Druckfeder dient einem doppelten Zweck, nämlich einerseits den Eingriff zwischen dem Verriegelungselement der Buchse und dem Eingriffsabschnitt des Rohrnippels in eine definierte Position vorzuspannen und andererseits dafür zu sorgen, daß im nicht verriegelten Zustand der Rohrnippel aus der Buchse herausgeschoben wird, so daß der Eingriffsabschnitt die genannte Indikatorfunktion sicher erfüllt.

Die Ansprüche 2 bis 6 beziehen sich auf zweckmäßige Gestaltungen des Verriegelungsmechanismus, die unaufwendig in der Fertigung sind, eine sichere Verriegelung gewährleisten und dennoch ein einfaches Entkuppeln gestatten.

### Kurzbeschreibung der Zeichnung

Ausführungsbeispiele der Erfindung werden nachstehend anhand der Zeichnung näher erläutert. Darin zeigt
Fig. 1 eine teilweise im Axialschnitt dargestellte Schnellkupplung im gekuppelten und verriegelten Zustand,
Fig. 2 eine vergrößerte Detailansicht des Verriegelungsbereichs der Schnellkupplung nach Fig. 1,
Fig. 3 die gleiche Kupplung im zusammengeschobenen, aber nicht verriegelten Zustand, und
Fig. 4 eine der Fig. 1 ähnliche Darstellung einer Schnellkupplung mit einer anders gestalteten Verriegelungsanordnung.

### Detaillierte Beschreibung von Ausführungsbeispielen

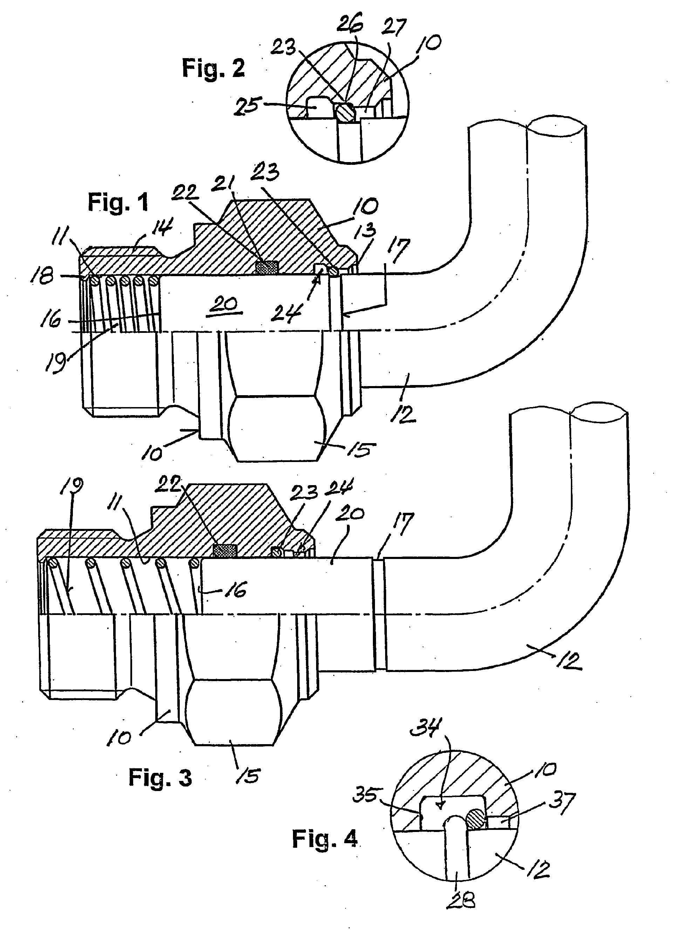

Die in Fig. 1 gezeigte Schnellkupplung umfaßt eine Buchse **10** mit einer Durchgangsbohrung **11** und einen in diese einführbaren und mit der Muffe zu kuppelnden Rohrnippel **12.** Die Buchse **10** ist an ihrem vom Einführende **13** für den Rohrnippel **12** abgewandten Ende mit einem Außengewinde **14** zum Einschrauben in ein Maschinengehäuse, beispielsweise einen Kraftfahrzeug-Motorblock, und auf einem weiteren Teil ihrer Außenfläche mit einem Sechskant **15** versehen. Anstelle einer Verschraubung kann die Buchse **10** auch als Einsatzteil gestaltet sein, das in eine entsprechende Bohrung des Maschinengehäuses eingesetzt und durch Materialverdrängung darin befestigt wird, wie dies in EP 0 467 381 A1 beschrieben ist.

Der Rohrnippel **12** ist über seine in die Buchse **10** einführbare Länge zylindrisch gestaltet und weist in dem Ausführungsbeispiel nach Fig. 1 bis 3 in einigem Abstand von seinem Einführende **16** eine Ringnut oder Rille **17** auf. In dem gezeigten Ausführungsbeispiel ist der Rohrnippel **12** außerhalb der Buchse **10** gekrümmt.

Zwischen dem Einführende **16** des Rohrnippels **12** und einem im Innern der Durchgangsbohrung **11** der Buchse **10** ausgebildeten ringförmigen Anschlag **18** ist eine wendelförmige Druckfeder **19** angeordnet, deren Außendurchmesser im komprimierten Zustand etwa gleich dem Innendurchmesser der Durchgangsbohrung **11** ist. In dem gezeigten Ausführungsbeispiel befindet sich der Anschlag **18** an dem vom Einführende **13** abgewandten Ende der Buchse **10.**

Ferner weist die Buchse **10** in dem Bereich, in dem sich im gekuppelten Zustand der zwischen dem Einführende **16** und der Rille **17** gelegene zylindrische Endabschnitt **20** des Rohrnippels **12** befindet, eine Ringnut **21**, in die ein dichtender O-Ring **22** eingelegt ist.

Zur Verriegelung des Rohrnippels **12** in der Buchse **10** in dem in Fig. 1 und 2 gezeigten Kupplungszustand dient ein in Radialrichtung federnder, in Umfangsrichtung geteilter Sperr-Ring **23**, der so bemessen ist, daß sein Innendurchmesser im entspannten Zustand geringer ist als der Außendurchmesser des Rohrnippels **12.** Der Sperr-Ring **23** befindet sich in einer in der Buchse **10** nahe deren Einführende ausgearbeiteten Ringnut **24,** die drei aufeinanderfolgende Bereiche **25...27** unterschiedlichen Durchmessers aufweist.

Der innere Bereich **25** hat einen Innendurchmesser, der etwas größer ist als der Durchmesser des Rohrnippels **12** plus der doppelten radialen Dicke des Sperr-Rings **23.** Der Innendurchmesser des mittleren Bereichs **26** der Ringnut **24** entspricht dem Außendurchmesser der in dem Rohrnippel **12** vorgesehenen Rille **17** plus der doppelten radialen Dicke des Sperr-Rings **23**. Der Innendurchmesser des äußeren Bereichs **27** der Ringnut **24** ist kleiner als der des mittleren Bereichs **26.**

Wird der Rohrnippel **12** mit seinem Endabschnitt **20** in die Durchgangsbohrung **11** der Buchse **10** genügend weit eingeschoben, so gelangt die in dem Rohrnippel **12** ausgebildete Rille **17** in den Bereich der in der Buchse **10** vorgesehenen Ringnut **24**, und der Sperr-Ring **23** tritt in die Rille **17** ein, in der er aufgrund seiner Vorspannung einrastet.

Beim Loslassen versucht die beim Einschieben zusammengedrückte Druckfeder **19** den Rohrnippel **12** nach außen zu schieben, wobei der Sperr-Ring **23** in den mittleren Bereich **26** der Ringnut **24** gedrängt wird, bis er in der in Fig. 2 gezeigten Stellung an der Stufe zwischen dem mittleren Bereich **26** und dem äußeren Bereich **27** der Ringnut **24** anstößt. Dies ist die vollständig gekuppelte und verriegelte Stellung, in der sich die Rille **17** des Rohrnippels vollständig innerhalb der Buchse **10** befindet.

Zum Lösen der Kupplung kann ein aus zwei Rohrhälften bestehendes Entriegelungswerkzeug benutzt werden, das die in EP 0 467 381 A1, Fig. 12 gezeigte Form haben kann und hier nicht eigens dargestellt ist. Die beiden Rohrhälften dieses Werkzeugs sind so bemessen, daß sie durch den Zwischenraum zwischen dem äußeren Bereich **27** der Ringnut **24** und der Außenseite des Rohrnippels **12** eingeschoben werden können. Wird nun der Rohrnippel **12** gegen die Kraft der Druckfeder **19** nach innen gedrückt, bis der Sperr-Ring **23** dem weiteren, inneren Bereich **25** der Ringnut **24** gegenüberliegt, so läßt sich der Sperr-Ring **23** mit Hilfe des Werkzeugs aus der Rille **17** des Rohrnippels herausheben, woraufhin sich der Rohrnippel **12** aus der Durchgangsbohrung **11** der Buchse **10** herausziehen läßt.

Das Entriegelungswerkzeug kann auch - wie in EP 0 467 381 A1, Fig. 1 gezeigt - die Form einer auf dem Rohrnippel verschiebbaren Hülse haben, deren Wandstärke dem Zwischenraum zwischen dem äußeren Bereich **27** der Ringnut **24** und der Außenseite des Rohrnippels **12** entspricht. Um die Kupplung nicht zu beschädigen, besteht eine solche Hülse vorzugsweise aus Kunststoff.

In dem in Fig. 3 gezeigten Zustand greift zwar der Endabschnitt **20** des Rohrnippels **12** immer noch in die Buchse **10** ein, wobei auch der O-Ring **22** an dem Endabschnitt **20** anliegen und eine Dichtung bewirken mag. In diesem Zustand ist die Kupplung aber nicht verriegelt, so daß eine unbeabsichtigte Relativbewegung zwischen Buchse **10** und Rohrnippel 12 zu Undichtigkeit oder gar einem vollständigen Lösen der Kupplung führen kann. Dieser unverriegelte Kupplungszustand läßt sich optisch, und zwar mit dem bloßen Auge oder mit Hilfe einer Bilderkennungseinrichtung leicht daran erkennen, daß die Rille **17** des Rohrnippels **12** außerhalb der Buchse **10** sichtbar ist.

Bei der in Fig. 4 gezeigten zweiten Ausführungsform hat der Rohrnippel **12** statt der Rille einen Vorsprung **28,** der beispielsweise als Ringwulst durch axiales Stauchen des Rohrnippels geformt werden kann. In diesem Fall weist die in der Buchse **10** vorhandene Ringnut **34** zwei Bereiche **35, 37** auf, wobei der Innendurchmesser des inneren Bereichs **35** geringfügig größer ist als der Außendurchmesser des ringförmigen Ringwulstes **28** plus der doppelten radialen Dicke des Sperr-Rings **23.** Der Innendurchmesser des äußeren Bereichs **37** der Ringnut **34** entspricht dem Außendurchmesser des Ringwulstes **28**; genau genommen ist er nur geringfügig größer als dieser, damit sich der Rohrnippel **12** leicht einführen läßt. Der äußere Bereich **37** bildet mit der Außenfläche des Rohrnippels **12** einen Spalt zum Einführen des oben erwähnten Entriegelungswerkzeugs.

Beim Einschieben des Endabschnitts **20** des Rohrnippels **12** gegen die Kraft der Druckfeder **19** wird der von der inneren Stirnfläche des Ringnutbereichs **35** festgehaltene Sperr-Ring **23** über den Ringwulst **28** hinweggehoben. Beim Loslassen bewirkt die Druckfeder **19,** daß der Sperr-Ring **23** von dem Ringwulst **28** gegen die entgegengesetzte Stirnfläche des Ringnutbereichs **35** gedrückt wird und die Verriegelung bewirkt.

Wird der Rohrnippel **12** nicht genügend weit in die Buchse eingeführt und daher der Verriegelungszustand nicht erreicht, so schiebt die Druckfeder **19** den Rohrnippel **12** so weit aus der Buchse **10** heraus, daß der Ringwulst **28** außerhalb der Buchse sichtbar bleibt.

Da sich die Verriegelungs-Ringnut **24** bzw. **24** bei beiden Ausführungsbeispielen in unmittelbarer Nähe des Einführendes **13** der Buchse **10** befindet, wird die Rille **17** bzw. der Ringwulst **28** außerhalb der Buchse **10** sichtbar, wenn keine Einrastung erfolgt. Gegebenenfalls befindet sich aber die Rille **17** bzw. der Ringwulst **28** nahe dem Einführende **13** der Buchse **10.**

Die Druckfeder **19**, die die in Fig. 1, 2 und 4 gezeigte eingerastete Verriegelungsstellung definiert, ist so dimensioniert, daß sie im nicht verriegelten Zustand den Rohrnippel **12** so weit aus der Buchse **10** herausschiebt, daß sich Rille **17** bzw. Ringwulst **28** in einigem Abstand von dem Einführende **13** der Buchse **10** befindet und daher auf jeden Fall deutlich sichtbar ist.

### Bezugszeichenliste

- **10**: Buchse
- **11**: Durchgangsbohrung
- **12**: Rohrnippel
- **13**: Einführende der Buchse **10**
- **14**: Außengewinde
- **15**: Sechskant
- **16**: Einführende des Rohrnippels **12**
- **17**: Rille im Rohrnippel **12**
- **18**: Anschlag
- **19**: Druckfeder
- **20**: Endabschnitt
- **21**: Ringnut für O-Ring **22**
- **22**: O-Ring
- **23**: Sperr-Ring
- **24**: Ringnut in der Buchse **10**
- **25**: innerer Bereich der Ringnut **24**
- **26**: mittlerer Bereich der Ringnut **24**
- **27**: äußerer Bereich der Ringnut **24**
- **28**: Ringwulst ,
- **34**: Ringnut in der Buchse **10**
- **35**: innerer Bereich der Ringnut **34**
- **37**: äußerer Bereich der Ringnut **34**

## Patentansprüche

1. Schnellkupplung mit
einer Buchse (**10**),
einem in die Buchse (**10**) einführbaren Rohrnippel (**12**), der an seiner Außenfläche einen Eingriffsabschnitt (**17**, **28**) mit verringertem oder vergrößertem Durchmesser aufweist,
einem in der Buchse (**10**) vorgesehenen Verriegelungselement (**23**), das bei Eingriff mit dem Eingriffsabschnitt (**17**, **28**) des Rohrnippels (**12**) diesen im gekuppelten Zustand in der Buchse (**10**) hält, und
einer zwischen einem inneren Anschlag (**18**) der Buchse (**10**) und dem Einführende (**16**) des Rohrnippels (**12**) angeordneten Druckfeder (**19**),
**dadurch gekennzeichnet, daß** das Verriegelungselement (**23**) an einer dem Einführende (**13**) der Buchse (**10**) derart benachbarten Stelle angeordnet und die Druckfeder (**19**) derart dimensioniert ist, daß im nicht gekuppelten Zustand die Druckfeder (**19**) den Rohrnippel (**12**) so weit aus der Buchse (**10**) herausschiebt, daß sich der Eingriffsabschnitt (**17**, **28**) außerhalb der Buchse (**10**) befindet.

2. Schnellkupplung nach Anspruch 1, wobei der Eingriffsabschnitt des Rohrnippels (**12**) als Rille (**17**) ausgebildet und in der Buchse (**10**) eine Nut (**24**) vorgesehen ist, die drei aufeinanderfolgende Bereiche (**25**...**27**) mit in Axialrichtung zum Einführende (**13**) der Buchse (**10**) hin abnehmenden Durchmessern aufweist, wobei der Durchmesser des inneren Bereichs (**25**) mindestens gleich dem Außendurchmesser des Rohrnippels (**12**) plus der doppelten radialen Dicke des Verriegelungselements (**23**) ist und der Durchmesser des mittleren Bereichs (**26**) dem Durchmesser der Rille (**17**) plus der doppelten radialen Dicke des Verriegelungselements (**23**) entspricht.

3. Schnellkupplung nach Anspruch 2, wobei der Durchmesser des äußeren Bereichs (**27**) der Nut (**24**) um ein Maß, das die Einführung eines Entriegelungswerkzeugs gestattet, größer ist als der Außendurchmesser des Rohrnippels (**12**).

4. Schnellkupplung nach Anspruch 2 oder 3, wobei das Verriegelungselement ein federnder Sperr-Ring (**23**) ist, dessen Innendurchmesser im entspannten Zustand kleiner ist als der Außendurchmesser des Rohrnippels (**12**).

5. Schnellkupplung nach Anspruch 1, wobei der Eingriffsabschnitt des Rohrnippels (**12**) als Vorsprung (**28**) ausgebildet und in der Buchse (**10**) eine Nut (**34**) mit zwei aufeinanderfolgenden Bereichen (**35**, **37** vorgesehen ist, wobei der Durchmesser des an das Einführende (**13**) der Buchse (**10**) anschließenden äußeren Bereichs (**37**) dem Außendurchmesser des Vorsprungs (**28**) entspricht und der Durchmesser des inneren Bereichs (**35**) mindestens gleich dem Außendurchmesser des Vorsprungs (**28**) plus der doppelten radialen Dicke des Verriegelungselements (**23**) ist.

6. Schnellkupplung nach Anspruch 5, wobei das Verriegelungselement ein federnder Sperr-Ring (**23**) ist, dessen Innendurchmesser im entspannten Zustand kleiner ist als der Außendurchmesser des Vorsprungs (**28**) des Rohrnippels (**12**).

## Claims

1. A rapid coupling comprising
a bush (**10**);
a pipe nipple (**12**) adapted to be inserted into the bush (**10**) and having on its outer surface an engagement section (**17**, **28**) of reduced or increased diameter;
a locking element (**23**) which is provided in the bush (**10**) and which, upon engagement with the engagement section (**17**, **28**) of the pipe nipple (**12**), retains the latter in the coupled state in the bush (**10**); and
a compression spring (**19**) disposed between an inner stop (**18**) of the bush (**10**) and an insertion end (**16**) of the pipe nipple (**12**),
**characterised in that** the locking element (**23**) is disposed at such a location adjacent to an insertion end (**13**) of the bush (**10**) and the compression spring (**19**) is dimensioned in such a way that, in the uncoupled state, the compression spring (**19**) pushes the pipe nipple (**12**) out of the bush (**10**) to such an extent that the engagement section (**17**, **28**) is located outside the bush (**10**).

2. The rapid coupling of claim 1, wherein the engagement section of the pipe nipple (**12**) is formed as a groove (**17**) and a recess (**24**) is provided in the bush (**10**), the recess (**24**) having three successive regions (**25**...**27**) with diameters decreasing in the axial direction toward the insertion end (**13**) of the bush (**10**), the diameter of the inner region (**25**) being at least equal to the outer diameter of the pipe nipple (**12**) plus twice the radial thickness of the locking element (**23**), and the diameter of the centre region (**26**) corresponding to the diameter of the groove (**17**) plus twice the radial thickness of the locking element (**23**).

3. The rapid coupling of claim 2, wherein the diameter of the outer region (**27**) of the recess (**24**) is larger than the outer diameter of the pipe nipple (**12**) to an extent which enables an unlocking tool to be inserted.

4. The rapid coupling of claim 2 or 3, wherein the locking element is a resilient retaining ring (**23**), the inner diameter of which, in the relieved state, is smaller than the outer diameter of the pipe nipple (**12**).

5. The rapid coupling of claim 1, wherein the engagement section of the pipe nipple (**12**) is formed as a projection (**28**), and a recess (**34**) with two successive regions (**35**, **37**) is provided in the bush (**10**), the diameter of the outer region (**37**) adjoining the insertion end (**13**) of the bush (**10**) corresponding to the outer diameter of the projection (**28**), and the diameter of the inner region (**35**) being at least equal to the outer diameter of the projection (**28**) plus twice the radial thickness of the locking element (**23**).

6. The rapid coupling of claim 5, wherein the locking element is a resilient retaining ring (**23**), the inner diameter of which, in the relieved state, is smaller than the outer diameter of the projection (**28**) of the pipe nipple (**12**).

## Revendications

1. Raccord rapide comportant :
un manchon (10),
un embout mâle (12) pouvant être inséré dans le manchon (10), dont la surface extérieure comporte une partie de prise (17, 28) ayant un diamètre réduit ou augmenté,
un élément de blocage (23) prévu dans le manchon (10), qui maintient l'embout mâle (12) à l'état couplé dans le manchon (10) lorsque l'embout mâle est en prise avec la partie de prise (17, 28), et
un ressort de compression (18) disposé entre une butée intérieure (18) du manchon (10) et l'extrémité d'insertion (13) de l'embout mâle (12),
**caractérisé en ce que** l'élément de blocage (23) est disposé à un emplacement adjacent à l'extrémité d'insertion (13) du manchon (10) et le ressort de compression (19) est dimensionné de telle sorte qu'à l'état non couplé, le ressort de compression (19) pousse l'embout mâle (12) hors du manchon (10) suffisamment loin pour que la partie de prise (17, 28) se situe à l'extérieur du manchon (10).

2. Raccord rapide selon la revendication 1, dans lequel la partie de prise de l'embout mâle (12) est formée comme une rainure (17) et un écrou (24) est prévu dans le manchon (10), lequel écrou comporte trois régions successives (25 à 27) dont le diamètre décroît dans une direction axiale vers l'extrémité d'insertion (13) du manchon (10), le diamètre de la région intérieure (25) étant au moins égal au diamètre extérieur de l'embout mâle (12) plus le double de l'épaisseur radiale de l'élément de blocage (23), et le diamètre de la région centrale (26) correspondant au diamètre de la rainure (17) plus le double de l'épaisseur radiale de l'élément de blocage (23).

3. Raccord rapide selon la revendication 2, dans lequel le diamètre de la région extérieure (27) de l'écrou (24) autour d'un espace qui permet l'insertion d'un outil de déblocage, est plus grand que le diamètre extérieur de l'embout mâle (12).

4. Raccord rapide selon la revendication 2 ou 3, dans lequel l'élément de blocage est une bague de retenue élastique (23) dont le diamètre intérieur est plus petit à l'état détendu que le diamètre extérieur de l'embout mâle (12).

5. Raccord rapide selon la revendication 1, dans lequel la partie de prise de l'embout mâle (12) est formée comme une saillie (28) et un écrou (34) comportant deux régions successives (35, 37) est prévu dans le manchon (10) le diamètre de la région extérieure (37) adjacente à l'extrémité d'insertion (13) du manchon (10) correspondant au diamètre extérieur de la saillie (38), et le diamètre de la région intérieure (35) est au moins égal au diamètre extérieur de la saillie (28) plus le double de l'épaisseur radiale de l'élément de blocage (23).

6. Raccord rapide selon la revendication 5, dans lequel l'élément de blocage est une bague de retenue élastique (23) dont le diamètre intérieur à l'état détendu est plus petit que le diamètre extérieur de la saillie (28) de l'embout mâle (12).
